# EUROPEAN PATENT APPLICATION

(11) **EP 1 151 853 A1**
(43) Date of publication of application: **07.11.2001**
(21) Application number: 00976385.5
(22) Date of filing: 21.11.2000
(51) Int. Cl.: B32B 7/12, C09J 7/00, B32B 9/00

(54) **EASILY DELAMINATABLE LAMINATE AND RESIN COMPOSITION FOR USE THEREIN**

(30) Priority: 22.11.1999 JP 33112299
(71) Applicant: Sumitomo Chemical Company, Limited, Osaka-shi Osaka 541-8550 (JP)
(72) Inventor: FUJITA, Mahito, Ibaraki-shi, Osaka 567-0826 (JP); NAITOH, Shigeki, Suita-shi, Osaka (JP)
(74) Representative: VOSSIUS & PARTNER
(86) International application number: JP0008195
(87) International publication number: WO0138085

(57) **Abstract**

There are provided: an easy-release laminate having a high adhesive property when in use while allowing easy release of a substrate thereof when irradiated with energy, the laminate comprising (A): a substrate, (B): an adhesive that becomes capable of release when receiving energy, and (C): an adhesive that does not become capable of release even when receiving energy, which are laminated sequentially; and a resin composition comprising an epoxy resin and/or a modified silicone resin, and a foaming agent.

## Description

### Technical Field

The present invention relates to a laminate comprising a substrate and an adhesive. Specifically, the invention relates to a laminate having a superior easy release property characterized that it exhibits high adhesion in use, while the substrate thereof is easily released from the laminate with the adhesive layer scarcely adhering to the substrate when the laminate is received energy for recycling the substrate.

The present invention further relates to a specific resin composition for use as an active ingredient of the adhesive forming the laminate.

### Background Art

Laminates formed by laminating a substrate and an adhesive are used in a great number of articles such as vehicle parts, household electrical appliances, electronic products, office supplies and life commodities. Recently, there is a demand for methods of recovering substrates from such laminates for recycling (reuse) of the substrates. Heretofore, there have been proposed laminates that permit their substrates to be easily released for the recycling thereof by allowing the laminates to receive thermal energy or electromagnetic energy thereby to lower the adhesive powers of their adhesive layers when the substrates are to be recycled (refer to Japanese Patent Laid-Open Nos. HEI 5-43851, HEI 6-33025 and HEI 10-119169).

Japanese Patent Laid-Open No. HEI 5-269906, for instance, discloses a laminate comprising substrate/crosslinkable polymer/crosslinkable polymer containing a foaming agent (adhesive containing the foaming agent and a urethane resin)/crosslinkable polymer/substrate, as well as a laminate comprising substrate/crosslinkable polymer containing a foaming agent (adhesive containing the foaming agent and a urethane resin)/substrate, and reports that the substrate of such a laminate can be released and recovered by irradiating the laminate with energy.

When the inventors of the present invention irradiated these laminates with energy, it was proved that the substrates thereof were released but the adhesive layers adhered to the substrates thus released and, hence, it was difficult to reuse the substrates as released.

Under such circumstances, the inventors of the present invention have made intensive study of laminates comprising a substrate and an adhesive in pursuit of a laminate such that an adhesive thereof has strong adhesion to a substrate thereof when the laminate is in use while no longer adhering to the substrate when the substrate is to be recycled. As a result, they have found that, by sequentially laminating an adhesive that becomes capable of release when receiving energy and another adhesive that does not become capable of release even when receiving energy, the adhesive has strong adhesion to the substrate when the laminate is in use while, when the substrate is to be recycled, the substrate can be easily released from the laminate with the adhesive scarcely adhering to the substrate or with the adhesive, if adhering to the substrate, becoming capable of easy release from the substrate by irradiating the laminate with energy. Thus, the present invention has been completed.

The inventors of the present invention have also found that a resin composition comprising a specific crosslinkable polymer and a foaming agent is an adhesive that has a high adhesive property when used in a laminate while exhibiting a superior easy release property when the laminate has been heated. Thus, the present invention has been completed.

### Disclosure of Invention

Accordingly, the present invention provides: a laminate made by sequentially laminating
(A): a substrate;
(B): an adhesive that becomes capable of release when receiving energy; and
(C) : an adhesive that does not become capable of release even when receiving energy;
and an article comprising the laminate.

The present invention further provides: a resin composition comprising an epoxy resin and/or a modified silicone resin, and a foaming agent; and an adhesive comprising the resin composition as an active ingredient.

The present invention will be described in detail.

Energy used in the present invention is the energy received by the laminate when the substrate is recycled from the laminate. Specific examples of the energy include optical energy such as ultraviolet radiation, visible light, infrared radiation, and laser light; electromagnetic energy such as microwave, ultrasonic wave, shock wave, radio wave, and magnetic field; thermal energy such as for heating or cooling; and atomic energy such as α-ray, β-ray, γ-ray, X-ray, and neutron beam. Among them, optical energy and thermal energy are preferable. Especially, ultraviolet radiation and heating are suitable.

Examples of substrates for use as the substrate (A) in the present invention include metals such as iron, steel, gold, silver, copper, and aluminum; inorganic substances such as glass, gypsum, earthenware, porcelain and ceramics; plastics or synthetic fibers such as made of polyolefin, polycarbonate, polystyrene, polyester, polyether, polyimide, polyamide, epoxy, polyurethane, ABS, and rubber; natural fibers such as cotton, hemp, and silk; chemical fibers such as viscose rayon and cellulose acetate; wood, paper, and hide. Among them, metals and plastics are preferable.

It is possible to use composite materials such as fiber-reinforced composite materials and plastics containing inorganic filler as the substrate (A).

As the need arises, the substrate (A) may be surface-treated at the side contacting (B) by coating a releasing agent, plating or the like; surface modification using plasma, laser or the like; surface oxidation; etching; or the like process.

The adhesive (B) that becomes capable of release when receiving energy, used in the present invention, is an adhesive that strongly adheres to the substrate when the laminate of the present invention is in use while becoming capable of easy release from the substrate by allowing the laminate of the present invention to receive energy. Specific examples of the such adhesives include a resin such that the adhesive power is lowered when receiving energy through heating or ultraviolet irradiation, and a resin containing a foaming agent that foams when receiving energy.

Specific examples of the resins such that the adhesive power is lowered when receiving energy include: a resin used as a low-melting-point hot melt adhesive such as an ethylene-vinyl acetate copolymer, and a thermoplastic adhesive allowing its solid plasticizer, such as wax, to bleed to the interface when heated to a predetermined temperature, as resins of which the adhesive powers are lowered by heating; and "SK DINE SW-2" produced by SOKEN KAGAKU CO., as resins of which the adhesive powers are lowered by ultraviolet irradiation.

The foaming agent that foams when receiving energy, used in the latter, is, for example, a foaming agent that expands in volume when heated. Specific examples of such foaming agents include inorganic foaming agents, organic foaming agents, and thermal expansible hollow bodies. Examples of such inorganic foaming agents include carbonate compounds such as sodium bicarbonate, ammonium carbonate, ammonium bicarbonate, and ammonium nitrite; phosphate compounds such as amide polyphosphate, ammonium polyphosphate, and melamine phosphate; carbonizable materials such as starch, cellulose, sugars, and dipentaerythritol; light metals such as magnesium powder and aluminum powder; hydrides such as sodium boron hydride and sodium hydride; and azides such as sodium azide. Examples of such organic foaming agents include azo compounds such as azodicarbonamide and azobisisobutyronitrile; nitroso compounds such as dinitrosopentamethylenetetramine and N,N'-dinitroso-N,N'-dimethylterephthalamide; hydrazide compounds such as p-toluenesulfonylhydrazide, p,p'-oxybis(benzenesulfonylhydrazide), and hydrazonecarbonamide; p-toluenesulfonyl azide, acetone-p-sulfonylhydrazone, melamine, urea, and dicyandiamide.

Examples of such thermal expansible hollow bodies include spherical bodies having a particle diameter of 1 to 50 i each comprising a shell portion formed from polyvinylidene chloride, copolymer of polyvinylidene chloride and acrylonitrile, polyacrylonitrile, copolymer of acrylonitrile and methyl acrylate, or the like, and a low-boiling-point hydrocarbon, such as ethane, propane, butane, pentane, hexane or heptane, contained inside the shell portion, for example, "MICROSPHERE" produced by Matsumoto Yushi-Seiyaku Co., Ltd.

Among the aforementioned foaming agents, thermal expansible hollow bodies are suitable.

The foregoing foaming agents may be used either alone or in combination of two or more.

Examples of resins containing such a foaming agent for use as the adhesive (B) include room temperature curing resins such as vinyl acetate emulsion, urea, cyanoacrylate, and urethane; thermosetting resins such as phenol and epoxy; photosetting resins such as urethane-acrylate and epoxy-acrylate; and hot melt resins such as ethylene-vinyl ester copolymers. Among them, crosslinkable polymers such as thermosetting resins and/or photosetting resins are preferable. Especially, photosetting resins are suitable.

Use of a pressure-sensitive adhesive having tack as the resin containing a foaming agent is not preferable because the adhesive becomes tacky at its surface during manufacture of the laminate and hence is difficult to handle.

As required, the adhesive (B) that becomes capable of release when receiving energy according to the present invention may contain solvents such as an organic solvent and water; a thermoplastic resin having gas barrier properties such as polyvinyl alcohol, polyamide or polyester; a filler, antioxidant, polymerization inhibitor, adhesion imparting agent; a surface regulator such as a surface active agent; an ultraviolet absorber, antioxidant, antistatic agent, and the like.

The adhesive (C) that does not become capable of release even when receiving energy according to the present invention may be any adhesive of which the adhesive power is not lowered even when an article comprising the laminate of the present invention is allowed to receive energy for disposal of the article. Specific examples of such adhesives include room temperature curing resins such as vinyl acetate emulsion, urea, cyanoacrylate, and urethane; thermosetting resins such as phenol and epoxy; photosetting resins such as urethane-acrylate and epoxy-acrylate; and hot melt resins such as ethylene-vinyl ester copolymers. Preferable among them are hot melt resins, room temperature curing resins, and crosslinkable polymers such as thermosetting resins and photosetting resins. Especially, thermosetting resins and photosetting resins are suitable.

The adhesive (C) is preferably permeable to energy that is received by the laminate when an article comprising the laminate is to be disposed of.

Use of a foamed urethane resin or a foamed urea resin as the adhesive (C) is not preferable because the presence of foam causes the adhesive power thereof to lower. Use of a pressure-sensitive adhesive having tack as an adhesive that does not become capable of release even when receiving energy such as the adhesive (C) is not preferable either, because the adhesive becomes tacky at its surface during manufacture of the laminate and hence is difficult to handle.

In the case where an adhesive containing a foaming agent is used as the adhesive (B), the same resin as used in the adhesive (B) may be used as the adhesive (C).

As required, the adhesive (C) used in the present invention may contain solvents such as an organic solvent and water; a thermoplastic resin having gas barrier properties such as polyvinyl alcohol, polyamide or polyester; a filler, antioxidant, polymerization inhibitor, adhesion imparting agent; a surface regulator such as a surface active agent; an ultraviolet absorber, antioxidant, antistatic agent, and the like.

As described above, the present invention is directed to a laminate made by sequentially laminating (A) : a substrate, (B): an adhesive that becomes capable of release when receiving energy, and (C): an adhesive that does not become capable of release even when receiving energy. A laminate further comprising (B'): an adhesive that becomes capable of release when receiving energy, (B') being same as or different from the adhesive (B), and (A'): a substrate same as or different from the substrate (A), which are sequentially laminated on an adhesive layer surface of the adhesive (C) of the above mentioned laminate, is preferable because both of the substrates (A) and (A') can be recycled.

It is possible that an adhesive that becomes capable of release when receiving energy, an adhesive that does not become capable of release even when receiving energy, and the like are sequentially laminated on a surface of the substrate (A') on which any adhesive layer is not laminated in the laminate comprising (A), (B), (C), (B') and (A').

In this case also, the adhesive (C) is preferably permeable to energy that is received by the laminate when an article comprising the laminate is to be disposed of. The term "permeable" as used herein means a property of allowing propagation of energy received by the laminate from one direction to such a degree as to cause release of the substrate on the energy-receiving side as well as release of the substrate on the opposite side. In other words, when the laminate comprising sequentially laminated (A), (B), (C), (B') and (A') is allowed to receive energy from the side of (A) on which any adhesive is not laminated, the energy that can pass through (C) causes the adhesive power of (B) as well as that of (B') to lower thereby allowing both of the substrates (A) and (A') to be released. For this reason, the adhesive (C) that does not become capable of release even when receiving energy is preferably permeable to energy that is received by the laminate of the present invention.

Preferable among laminates according to the present invention is one in which (B-1): a crosslinkable polymer containing a foaming agent and (C-1): a crosslinkable polymer are used as (B): the adhesive that becomes capable of release when receiving energy, and (C): the adhesive that does not become capable of release even when receiving energy, respectively. That is, such a preferable laminate is made by sequentially laminating:
(A): a substrate;
(B-1): a crosslinkable polymer containing a foaming agent; and
(C-1): a crosslinkable polymer, which are sequentially laminated.

The crosslinkable polymers used in (B-1) and (C-1) are each a polymer that assumes a state capable of its application such as a liquid, solution, or melt before bonding while becoming a three-dimensional polymer through intramolecular crosslinking after bonding. Examples of such crosslinkable polymers include photosetting resins and thermosetting resins.

Usually, the photosetting resin is a resin comprising an oligomer and/or monomer having a photosetting property, and a photopolymerization initiator. Examples of such an oligomer and/or monomer having a photosetting property include an oligomer and/or monomer having at least one carbon-carbon unsaturated bond capable of radical photopolymerization; a combination of an oligomer having double-bonds at the terminal of a molecule thereof capable of Michael addition photopolymerization and a polythiol; and an alicyclic epoxy compound capable of cation photopolymerization. Among others, use of an oligomer and/or monomer having at least one carbon-carbon unsaturated bond is preferable.

Usually used as the oligomer having a carbon-carbon unsaturated bond is an oligomer having at least one unsaturated group selected from an acryloyl group, a methacryloyl group, and a vinyl group, or a like oligomer. Specific examples of such oligomers include urethane acrylates such as urethane acrylate and urethane methacrylate; epoxy acrylates such as epoxy acrylate and epoxy methacrylate; polyester acrylates such as polyester acrylate and polyester methacrylate; melamine acrylates such as melamine acrylate and melamine methacrylate; acrylic resin acrylates, unsaturated polyesters, and polyenes.

Such a urethane acrylate may be, for example , one obtained by allowing an organic polyisocyanate, a polyol and a hydroxy acrylate compound to react with each other, or one obtained by allowing an organic polyisocyanate and a hydroxy acrylate compound to react with each other.

Examples of such epoxy acrylates include one obtained by allowing acrylic acid and/or methacrylic acid or the like with an epoxy resin such as bisphenol A epoxy resin or novolak-type epoxy resin.

Examples of such polyester acrylates include one obtained by allowing acrylic acid and/or methacrylic acid or the like to react with a polyester polyol synthesized from a polyvalent alcohol and a polyvalent carboxylic acid.

Examples of such melamine acrylates include one obtained by causing a dealcoholating reaction between a melamine resin obtained by condensation polymerization of melamine, urea, benzoguanamine or the like with formalin and β-hydroxyethyl acrylate or the like.

Examples of such acrylic resin acrylates include one obtained by allowing acrylic acid or methacrylic acid or the like to react with a functional group, such as carboxylic acid group, hydroxyl group, or glycidyl group, contained in an acrylic resin.

Examples of such unsaturated polyesters include one obtained by allowing a polyol to react with an α,β-unsaturated dicarboxylic acid such as fumaric acid or maleic anhydride.

Examples of such polyenes include one obtained by allowing an organic polyisocyanate to react with allyl alcohol and/or vinyl alcohol or the like.

As the monomer having a carbon-carbon unsaturated bond, on the other hand, there is usually used at least one monomer containing an unsaturated group selected from monofunctional acrylic monomers, polyfunctional acrylic monomers, vinyl group containing monomers and like monomers.

Usually used as the monofunctional acrylic monomer is a compound containing one acrylate or methacrylate group in a molecule thereof, or the like. Specific examples of such monofunctional acrylic monomers include monomers of the type having a cyclic structure such as isobornyl acrylate, isobornyl methacrylate, dicyclopentenyl acrylate, dicyclopentenyl methacrylate, tetrahydrofurfuryl acrylate, tetrahydrofurfuryl methacrylate, phenyl acrylate, phenyl methacrylate, benzyl acrylate, and benzyl methacrylate; and monomers having a hydroxyl group such as 2-hydroxyethyl acrylate, 2-hydroxyethyl methacrylate, 3-hydroxypropyl acrylate, 3-hydroxypropyl methacrylate, 4-hydroxybutyl acrylate, 4-hydroxybutyl methacrylate, 2-hydroxy-3-phenoxypropyl acrylate, and 2-hydroxy-3-phenoxypropyl methacrylate.

Also usable are monofunctional acrylic monomers obtained by previously modifying source alcohols or phenols used for the monomers having cyclic structures with alkylene oxides, and like monomers. Particularly, a modified monomer with an alkylene oxide having 2 or 3 carbon atoms is preferable. Examples of such modified monomers include dicyclopentenyloxyethyl acrylate, dicyclopentenyloxyethyl methacrylate, phenyloxyethyl acrylate, and phenyloxyethyl crylate.

As the polyfunctional acrylic monomer, there is usually used a compound containing two or more acrylate or methacrylate groups in a molecule thereof, or the like. Representatives of such compounds include acrylate group containing compounds such as polyethylene glycol diacrylate, 1,6-hexanediol diacrylate, neopentyl glycol diacrylate, neopentyl glycol hydroxypivalic acid diacrylate, caprolactone-modified neopentyl glycol hydroxypivalic acid diacrylate, trimethylolpropane triacrylate, pentaerythritol tetraacylate, dipentaerythritol hexaacrylate, caprolactone-modified dipentaerythritol hexaacrylate, and tris[acryloxyethyl] isocyanate.

Examples of vinyl group containing monomers include vinyl esters such as vinyl acetate, vinyl propionate, and branched fatty vinyl; aromatic vinyls such as styrene, chlorostyrene, alkylstyrene, and divinylbenzene; and nitrogen-containing vinyls such as N-vinylpyrrolidone and N-vinylcaprolactam.

Examples of photosetting resins include one or more monomers, one or more oligomers, and mixtures of one or more monomers and one or more oligomers. Use of a mixture of one or more monomers and one or more oligomers is preferable in terms of the viscosity, curing property, adhesive property and the like of a resulting photosetting resin.

Examples of photopolymerization initiators contained in such photosetting resins include carbonyl compounds, sulfur compounds, azo compounds, peroxides, and the like. Among them, carbonyl compounds are suitable. Examples of such carbonyl compounds include ultraviolet-absorbing carbonyl compounds such as benzophenone, benzyl, Michler's ketone, 2-chlorothioxanthone, 2,4-diethylthioxanthone, benzoin ethyl ether, diethoxyacetophenone, benzyldimethylketal, 2-hydroxy-2-methylpropiophenone, 1-hydroxycyclohexylphenylketone, 2,2-dimethoxy-1,2-diphenylethane-1-one, 2-methyl-1-[4-(methylthio)phenyl]-2-morpholinopropane-1-o ne, and
2,4-bis(trichloromethyl)-6-(4-methoxyphenyl)-1,3,5-triazi ne; and visible light absorbing carbonyl compounds such as camphorquinone and 3-ketocumarin.

Two or more photopolymerization initiators may be used as the photopolymerization initiators. As the need arises, the photosetting resin may contain a photopolymerization initiation aid or photosensitizer such as N,N-dimethylaminoacetophenone or ethyl p-N,N-dimethyl benzoate,.

The amount of the photopolymerization initiator used in the photosetting resin is usually about 0.5 to 20 parts by weight based on 100 parts by weight of the oligomer and/or monomer having a photosetting property.

As the photosetting resin, there may be used a commercially-available photosetting resin, for example, "SUMIFLASH XR-235 or XR-98" (a photosetting resin produced by Sumitomo Chemical Co. Ltd.), "DAICURE SD1700" (a photosetting resin produced by Dainippon Ink & Chemical, Inc.).

Examples of thermosetting resins used as the crosslinkable polymers in (B-1) and (C-1) include novolak resins, resol resins, urea resins, melamine resins, alkyd resins, imide resins, urethane resins, epoxy resins, modified silicone resins such as a silyl group-terminated polyether in which a reactive silyl group is introduced to the terminal thereof, and unsaturated polyester resins. Preferable among them are epoxy resins, modified silicone resins, and mixtures of epoxy resins and modified silicone resins.

As the thermosetting resin, there may be used a commercially-available thermosetting resin, for example, "ARALDITE RAPID" ( an epoxy adhesive produced by Ciba Specialty Chemicals Co., Ltd.), "ER-10" (an epoxy adhesive produced by Nippon N.SC), "BOND QUICK 5" (an epoxy adhesive produced by Konishi Co., Ltd.), "EP-330" (an epoxy adhesive produced by Cemedine Co., Ltd.), "SUPER X" (a modified silicone adhesive produced by Cemedine Co. Ltd.), "BOND SAIREX CLEAR" (a modified silicone adhesive produced by Konishi Co., Ltd.), "TAKELAK A-385 + TAKENATE A-50" (a urethane adhesive produced by Takeda Chemical Industries, Ltd.), or the like.

As the need arises, the thermosetting resin may contain a curing agent. Specific examples of such curing agents include hexamethylenetetramine and the like used for novolak resins; polyamines, acid anhydrides and the like used for epoxy resins; isocyanates and the like used for urethane resins; acids used for resol resins, alkyd resins and like resins; tin compounds, amine compounds and the like used for modified silicone resins; and peroxides, styrene and the like used for unsaturated polyester resins.

The crosslinkable polymers used in (B-1) and (C-1) may contain solvents such as an organic solvent and water; a thermoplastic resin having a gas barrier property such as polyvinyl alcohol, polyamide, or polyester; a filler, anti-oxidation inhibitor, polymerization inhibitor, adhesion imparting agent; a surface regulator such as a surface active agent; an ultraviolet absorber, antioxidant, antistatic agent, and the like.

(B-1) used in the present invention is the crosslinkable polymer containing a foaming agent. Among others, a photosetting resin containing a foaming agent is suitable.

As described above, an epoxy resin and/or a modified silicone resin are preferable as the thermosetting resin used as (B-1). Accordingly, a preferable example of (B-1) is a resin composition comprising an epoxy resin or a modified silicone resin, or a mixture of the epoxy resin and the modified silicone resin, and a foaming agent. This resin composition is novel and is characterized that the composition, per se, has a high adhesive property while exhibiting a superior easy-release property after heating of the laminate using this composition. For this reason, the resin composition can be used as an adhesive in the laminate of the present invention as well as in other laminates. Thus, the present invention also provides the resin composition comprising an epoxy resin and/or a modified silicone resin, and a foaming agent, as well as an adhesive comprising the resin composition as an active ingredient.

As the epoxy resin used in the resin composition, there is used, for example, a resin comprising a base resin having an epoxy group, and a curing agent, the resin being in an uncured state when mixed with the foaming agent or in a partially cured state having a viscosity to such a degree as to allow application of the resin composition onto the substrate while becoming cured after bonding.

Examples of base resins include glycidyl ether epoxy resins such as a bisphenol A epoxy resin, bisphenol F epoxy resin, phenolic novolak epoxy resin, cresylic novolak epoxy resin, and brominated epoxy resin; alicyclic epoxy resins resulting from epoxidation of double bonds such as butadiene, pentadiene, vinylcyclohexene, and dicyclopentyl ether; polyglycidyl compounds resulting from reaction between polyols, hydroxyl group containing silicon resins or the like and epihalohydrin; glycidylamine resins such as N,N-diglycidylaniline, tetraglycidyldiaminodiphenylmethane, and triglycidyl-p-aminophenol; glycidyl ester resins such as diglycidylphthalic acid ester, diglycidyltetrahydrophthalic acid ester, diglycidylhexahydrophthalic acid ester, and diglycidyl-p-oxy benzoate.

Incidentally, it is possible to use two or more kinds of base resins as the base resin. Among the above resins, glycidyl ether epoxy resins and glycidylamine resins are preferable as the base resin. Especially, bisphenol A epoxy resin is suitable.

Examples of curing agents contained in epoxy resins include aliphatic polyamines such as diethylenetriamine, triethylenetetramine, tetraethylenepentamine, dipropylenediamine, diethylaminopropylamine, piperidine, N-aminoethylpiperazine, menthenediamine, and m-xylenediamine; dimethylaminoalkylphenols such as 2-(dimethylaminomethyl)phenol, bis(dimethylaminoethyl)phenol, and 2,4,6-tris(dimethylaminomethyl)phenol; aromatic amines such as methanephenylenediamine, diaminodiphenylmethane, and diaminodiphenylsulfone; acid anhydrides such as trimellitic anhydride, ethylene glycol bis(anhydrotrimellitate), glycerol tris(anhydrotrimellitate), pyromellitic anhydride, maleic anhydride, and tetrahydrophthalic anhydride; polyaminopolyamides resulting from reaction between dimer acids and polyamines; imidazoles such as 2-methylimidazole, and 2-ethyl-4-methylimidazole, 2-undecylimidazole; boron trifluoride-amine complexes; dicyandiamides; aromatic diazonium salts; and polysulfides.

Incidentally, two or more kinds of curing agents may be used as the curing agent. Among the foregoing curing agents , dimethylaminoalkylphenols and polyaminopolyamides are suitable.

Methods of mixing the base resin and the curing agent to prepare the epoxy resin include, for example, a method such as to mix the base resin and the curing agent before mixing with the foaming agent, a method such as to mix the base resin and the foaming agent and, before bonding, mix the curing agent with the resulting mixture, a method such as to mix the curing agent and the foaming agent and, before bonding, mix the base resin with the resulting mixture, a method such as to mix the base resin, curing agent and foaming agent at a time, and like methods. The epoxy resin may be mixed with the modified silicone resin.

The modified silicone resin in the present invention is, for example, a resin containing a silyl-terminated polyether or the like and a curing catalyst such as a tin compound, aliphatic polyamine or the like. This resin is in an uncured state or a partially cured state having a viscosity to such a degree as to allow application of the resin onto the substrate when it is mixed with the foaming agent, while, after bonding, it forms a siloxane bond by absorbing the water content.

A process for preparing a silyl-terminated polyether is described as a specific example of a method of preparing the modified silicone resin. The process includes converting the terminal hydroxyl group of polypropylene glycol or the like into an alkoxide group such as a methoxy group; thereafter turning the resulting product into a high-molecular-weight compound by causing the molecular weight of the resulting product to increase by allowing the product to react with a polyvalent halogen compound such as methylene chloride; then introducing an olefin group to the terminal by allowing the resulting product to react with an organic halogen compound represented by CH₂=CHRX (where R represents a lower alkyl group and X represents a halogen atom); and subjecting the resulting product to a hydroxylation reaction through a desalting purification process to give a silyl-terminated polyether having a molecular weight of about 5,000 to 500,000 in which a reactive silyl group is introduced to the terminal.

As the polypropylene glycol, there may be used one obtained by copolymerization of propylene oxide and a (meth)acrylic acid, (meth)acrylic acid ester or the like, in addition to the propylene oxide.

The modified silicone resin usually contains a dehydrating agent such as an organosilane compound or an orthoformic acid ester, an adhesion imparting agent such as N-β-(aminoethyl-) γ-aminopropyltrimethoxysilane or, γ-aminopropyltrimethoxysilane.

The resin may further contain a silane coupling agent, an anti-sagging agent or the like.

As the modified silicone resin, there may be used a commercially-available one such as "BOND SAIREX CLEAR" (produced by Konishi Co., Ltd.) or "SUPER X" (produced by Cemedine Co., Ltd.).

Methods of mixing the silyl-terminated polyether and the curing catalyst to form the modified silicone resin include, for example, a method such as to mix the silyl-terminated polyether, dehydrating agent, adhesion imparting agent, curing catalyst and the like before mixing with the foaming agent, a method such as to mix the silyl-terminated polyether, dehydrating agent, adhesion imparting agent, foaming agent and the like and, before bonding, mix the curing catalyst with the resulting mixture, a method such as to mix the curing catalyst, the foaming agent and the like and, before bonding, mix the silyl-terminated polyether, dehydrating agent, adhesion imparting agent and the like with the resulting mixture, a method such as to mix all the components for forming the modified silicone resin at a time, and like methods.

The modified silicone resin may be mixed with the epoxy resin.

As described above, the crosslinkable polymer used in the present invention may be blended with other resin or the like unless the adhesive property and easy-release property thereof lower. In the case of the epoxy resin and/or modified silicone resin, it is also possible to blend other resin unless the adhesive property and easy-release property thereof lower. Examples of such additional resins include monomers having polymerizable double bonds such as unsaturated polyesters and prepolymers thereof; low-molecular-weight liquid elastomers to high-molecular-weight elastomers such as polybutadiene, maleated butadiene, epoxidized butadiene, maleated butadiene, butadiene-acrylonitrile copolymer and a carboxyl group containing resin thereof, polychloroprene, maleated butadiene, butadiene-acrylonitrile copoymer and a carboxyl group containing resin thereof, polychloroprene, butadiene-styrene copolymer, polyisoprene, butyl rubber, fluororubber, and natural rubber; polyethylene, polypropylene, polybutene, poly-4-methylpentene, polystyrene, AS resin, MBS resin, ABS resin, polyethylene-propylene copolymer, and tetrafluoroethylene-hexafluoropropylene copolymer; high-molecular-weight polymers such as polycarbonate, polyphenylene ether, polysulfone, polyester, polyimide, and polyphenylene sulfide and low-molecular-weight prepolymers thereof or oligomers; polyurethane, and polyfunctional maleimide.

Likewise, the epoxy resin and/or modified silicone resin may be blended with an organic or inorganic filler, dye, pigment, thickening agent, anti-foaming agent, dispersant, flame-retardant, brightener, thixotropy imparting agent, adhesion imparting agent, surface regulator such as a surface active agent, additives such as ultraviolet absorber, antioxidant and antistatic agent, a solvent such as toluene or methanol, or the like.

The content of the foaming agent in the crosslinkable polymer containing the foaming agent (B-1) used in the laminate of the present invention or in the resin composition comprising the epoxy resin and/or modified silicone resin and the foaming agent is an amount required to ensure sufficient adhesion when the laminate or the like is in use and allow the adhesive power of the adhesive layer (B) to lower to such a degree that the adhesive layer (B) can be easily released from the substrate (A) when the substrate (A) is irradiated with energy for its recovery. Specifically, though the content of the foaming agent varies depending on the kind of foaming agent used, the content of the foaming agent consisting of, for example, thermal expansible hollow bodies is usually about 10 to 80 parts by weight, preferably about 30 to 70 parts by weight based on 100 parts by weight of the epoxy resin and/or modified silicone resin. In the case of the foaming agent consisting of an organic foaming agent, the content thereof is usually about 20 to 100 parts by weight, preferably about 30 to 80 parts by weight based on 100 parts by weight of the epoxy resin and/or modified silicone resin.

The component (C-1) according to the present invention is the crosslinkable polymer not containing any foaming agent. Crosslinkable polymers for use in (B-1) such as photosetting resins, thermosetting resins and the like can be used in (C-1). The crosslinkable polymers usable in (C-1) may be same as or different from those usable in (B-1), and a mixture of two or more crosslinkable polymers may be used as the crosslinkable polymer of (C-1). Among such usable crosslinkable polymers, thermosetting resins are preferable. Especially, the epoxy resins and modified silicone resin as mentioned above are suitable.

Methods of manufacturing the laminate of the present invention include, for example, (1) a method such as to laminate any desired adherend on the adhesive layer surface of the adhesive (B) of a laminate comprising (A) and (B) through (C); (2) a method such as to laminate (C), (B) and (A) sequentially on any desired adherend; (3) a method such as to form a laminate comprising (A) and (B) and a laminate comprising (A') and (B') and then laminate these laminates on each other with their adhesive layers of (B) and (B') facing each other through (C); (4) a method such as to laminate (A), (B), (C), (B') and (A') on top of another sequentially; and like methods.

The "adherend", as used herein, is an object that can be bonded to (C), and examples of such adherends include substrates like (A), and articles such as car bodies and household electrical appliances. Preferably, the foregoing (B-1) and (C-1) are used as (B) or (B') and (C) or (C'), respectively.

The resin composition comprising the epoxy resin and/or modified silicone resin and the foaming agent has a high adhesive power even when laminated on the adherend without using (C) while exhibiting an easy-release property after having been heated. This holds true for the case where two adherends are bonded to each other with the resin composition.

As required, the resulting laminate may be subjected to a treatment such as clamping or post-curing.

Processes for laminating an adhesive layer of (B), (C) or the like that can be employed herein include, for example, bar coating, roll coating, spray coating, blade coating, screen coating, a process using an applicator, a process using a spin coater, and like processes.

In the case where (B) is a resin composition containing the foaming agent, the thickness of the adhesive layer is sufficient to be as large as or larger than the particle size of the foaming agent contained and is usually about 5 to 400 im.

Specific examples of method (3) of manufacturing the laminate of the present invention include a method comprising: spin-coating a photosetting resin containing thermal expansible hollow bodies on one side of each of plate-shaped substrates (A) and (A') and subjecting the resin thus coated to photosetting, to obtain (A)/(B) and (A')/(B'); and bar-coating the thermosetting resin (C) on the surface of (B), then laminating (A')/(B') on (A)/(B) through (C), and thereafter allowing the resulting laminate to stand at room temperature, to give (A)/(B)/(C)/(B')/(A').

The laminate thus obtained can be used in various articles requiring reuse of the substrates of the laminate, for example, household electrical appliances such as a refrigerator, washing machine, air conditioner, microwave oven, vacuum-cleaner, and TV set; business machines such as a personal computer, printer, copying machine, and telephone; vehicle parts such as a bumper and battery case; life commodities such as furniture and residence structural materials; building materials such as sealing materials; electronic products such as a liquid crystal panel, semiconductor device, printed circuit board, and integrated circuit; electronic products such as a bare cell package used in battery stocks such as secondary batteries; and like articles.

The substrate of the laminate of the present invention can be easily released and recovered from the laminate for reuse by irradiating the laminate with energy.

Methods of recovering the substrate that can be employed in the case where, for example, thermal energy is used as the energy to be applied to the laminate, include, for example, a method such as to place the laminate into an oven, warm water bath or the like and heat the laminate to cause the adhesive layer to foam thereby recovering the substrate; a method such as to apply flame, infrared radiation, steam, ultrasonic wave, electromagnetic wave or the like to the laminate to cause the adhesive layer to foam thereby recovering the substrate; and like methods.

Specific examples of methods of recovering the substrate that can be employed in the case where (B-1) is used as the adhesive (B) that becomes capable of release when receiving energy, include a method such as to place the laminate into an oven, warm water bath or the like and heat the laminate to usually about 80 to 300°C, preferably about 100 to 200°C to cause (B-1) to foam thereby recovering the substrate; a method such as to apply flame, infrared radiation, steam, ultrasonic wave, electromagnetic wave or the like to the article to cause (B-1) to foam thereby recovering the substrate; and like methods. Among these methods, a method such as to heat the laminate in an oven preheated to about 100 to 200°C to cause (B-1) to foam thereby recovering the substrate, is suitable.

The substrate thus recovered is in a state with little adhesive layer adhering thereto or with adhesive layer adhering thereto to such a degree as to permit easy release thereof from the substrate and hence can be reused.

In the case where the substrate is made from a metal, thermoplastic resin or the like, it is possible to melt-molding the substrate for reuse.

### Examples

The present invention will be more specifically described by way of examples, which should not be construed to limit the invention. The "part(s)" and "%" used in the examples are on a weight basis unless otherwise particularly noted.

### <Substrate: A>

The following test pieces were used as the substrate.
A-1: aluminum (AL) plate, 25 mm X 100 mm, thickness = 1 mm ("A1050P HB" (mirror-finished) produced by Sumitomo Light Metal Industries, Ltd.)
A-2: polycarbonate (PC) plate, 25 mm X 100 mm, thickness = 2 mm ("TAKIRON 1600" produced by Teijin Ltd.)

### <Adhesive that becomes capable of release when receiving energy or reference for comparison therewith: B>

The following crosslinkable polymers were used as the crosslinkable polymer containing a foaming agent.
B-1: comprising 100 parts by weight of an acrylate-type photosetting resin "SUMIFLASH XR-98" (produced by Sumitomo Chemical Co., Ltd.) and 50 parts by weight of thermal expansible bodies "MICROSPHERE F-30D (hereinafter referred to as "F30D")" (produced by Matsumoto Yushi-Seiyaku Co., Ltd.)
B-2: comprising 100 parts by weight of an epoxy-type thermosetting resin "ER-10" (produced by Nippon N.SC) and 50 parts by weight of "F30D".
B-3: [urethane-type adhesive + foaming agent] comprising a urethane-type two component adhesive consisting of "TAKELAK A385" and "TAKENATE A-50" (trade names; produced by Takeda Chemical Industries, Ltd.) used in an amount of 50 parts by weight each, and 50 parts by weight of "F30D".
B-4: acrylate-type photosetting resin "SUMIFLASH XR-98" (produced by Sumitomo Chemical Co., Ltd.) (not blended with any foaming agent, and same as C-3).
B-5: [epoxy resin + foaming agent] prepared by mixing an epoxy resin (two component type) "ER-10" (trade name; produced by Nippon N.SC; hereinafter referred to as "ER10") used in a total amount of 100 parts (50 parts of one component and 50 parts of the other component) and an organic foaming agent "CELLMAIK S" (trade name; produced by Sankyo Chemical Co., Ltd.) used in an amount of 50 parts together.
   B-6: [modified silicone resin + foaming agent] prepared by mixing 100 parts of a modified silicone resin (one component type) "BOND SAIREX CLEAR" (trade name; produced by Konishi Co., Ltd.; hereinafter referred to as "SAIREX") and 50 parts of "F-30D" together.

### <Adhesive that does not become capable of release even when receiving energy: C>

C-1: epoxy-type thermosetting resin "ARALDITE RAPID" (produced by Ciba Specialty Chemicals Co., Ltd.)
C-2: epoxy-type thermosetting resin "ER-10" (produced by Nippon S.NC).
C-3: acrylate-type photosetting resin "SUMIFLASH XR-98" (produced by Sumitomo Chemical Co., Ltd.)
C-4: acrylate-type photosetting resin "SUMIFLASH XR-235" (produced by Sumitomo Chemical Co., Ltd.)
C-5: modified silicone resin (one component type) "SAIREX".
C-6: urethane resin (two component type) "URETHANE"

### <Adhesion test>

An end portion of a test piece was brought into contact with an end portion of another test piece with a contact area of 25 mm X 20 mm (= 500 mm²) in Examples 1 to 6 and Comparative Examples 1 to 9 or with a contact area of 25 mm X 25 mm (= 625 mm²) in Examples 7 and 8 and Comparative Examples 10 to 14, and the adhesive power was measured by a tensile test according to JIS K 6850.

### Example 1

AL plate (A-1) was used as the substrate to be recycled, and adhesive (B-1) that becomes capable of release when receiving energy was laminated on one side of the AL plate to a thickness of 300 *µ*m by bar coating and was cured by UV irradiation at a radiant exposure of 400 mJ/cm². In turn, (C-4) was laminated on one side of PC plate (A-2) used as a substrate not required to recycle to a thickness of 70 *µ*m by spin coating, and the surfaces of the resulting adhesive layers of (B-1) and (C-4) were bonded to each other, followed by curing by UV irradiation at a radiant exposure of 400 mJ/cm², thus completing a laminate.

The adhesive power of the laminate thus obtained was not less than 1 N/mm².

A laminate manufactured in the same manner as above was heated in an oven at 150°C for five minutes. When this laminate was removed from the oven, it was found that (A-1) was released from the laminate with little adhesive adhering thereto and hence in a state ready for recycling, while the substrate (A-2) not required to recycle was attached with the adhesive layers of (B-1) and (C-4) in a solidified state and hence could not be released from the laminate easily.

### Example 2

Adhesive (B-1) was laminated on one side of AL plate substrate (A-1) to a thickness of 20 *µ*m by spin coating and cured by UV irradiation at a radiant exposure of 400 mJ/cm², to give a laminate comprising (A-1) and (B-1). In a similar manner, a laminate comprising PC plate substrate (A-2) and adhesive (B-1) was obtained. Subsequently, the surfaces of the adhesives of the two laminates thus obtained were bonded to each other through 300 *µ* m-thick adhesive (C-1), and the two laminates were fixed with clips and then allowed to stand at 23°C, 50%RH for 24 hours in a clipped state, thus completing a laminate.

The adhesive power of each laminate thus obtained was not less than 1 N/mm².

A laminate manufactured in the same manner as above was heated in an oven at 150°C for five minutes. When this laminate was removed from the oven, it was found that (A-1) was released from the laminate with little adhesive adhering thereto and hence in a state ready for recycling. Though the adhesive layers of (B-1), (C-1) and (B-1) in a solidified state were left on (A-2), the adhesive layers could be easily released from (A-2) and, hence, (A-2) was in a state ready for recycling.

### Comparative Examples 1 to 3

Comparative Examples 1 to 3 were carried out according to Examples 1 and 2 except that adhesive (B-4) not containing any foaming agent was used instead of adhesive (B-1), to obtain respective laminates. In Table 1, there are summarized the results of Comparative Examples 1 to 3 including the constitution of each laminate (type of substrate and type and thickness of adhesive), the adhesive power of each laminate, and the state of each substrate after each laminate had received energy (heating: 150°C X 5 min).

The "state of substrate" shown in Table 1 indicates the following states:
○: a state in which the substrate can be easily released with little adhesive layer adhering thereto; and
×: a state in which the substrate cannot be released from the laminate or in which though the substrate can be released from the laminate at a tensile strength of 1 N/mm² or more, the adhesive adheres to the substrate and cannot be easily released from the substrate.

**Table-1**

| | | | Example 1 | Example 2 | Comparative example 1 | Comparative example 2 | Comparative example 3 |
|---|---|---|---|---|---|---|---|
| Laminate | Substrate A-1 | Name | AL plate | AL plate | AL plate | AL plate | AL plate |
| | Adhesive B (on A-1 side) | Name | B-1 | B-1 | B-4 | B-4 | B-4 |
| | | Thickness (*µ* m) | 300 | 20 | 20 | 20 | 300 |
| | Adhesive C | Name | C-4 | C-1 | C-1 | C-1 | C-1 |
| | | Thickness (*µ* m) | 70 | 300 | 70 | 70 | 70 |
| | Adhesive B (on A-2 side) | Name | None | B-1 | None | B-4 | B-4 |
| | | Thickness (*µ* m) | 0 | 20 | 0 | 20 | 300 |
| | Substrate A-2 | Name | PC plate | PC plate | PC plate | PC plate | PC plate |
| Adhesive power (N/mm²) | | | >1.0 | >1.0 | >1.0 | >1.0 | 1.0 |
| Released state after heating | | Substrate A-1 | ○ | ○ | × | × | × |
| | | Substrate A-2 | × | ○ | × | × | × |

### Example 3

(B-1) was laminated on one side of (A-1) to a thickness of about 300 im by bar coating and was cured by UV irradiation at a radiant exposure of 400 mJ/cm². Subsequently, the surface of (B-1) was bonded to (A-2) through about 70 *µ*m-thick (C-1), and the resulting laminate was fixed with clips and then allowed to stand at 23°C, 50%RH for 24 hours in a clipped state, to give a laminate in which (A-1)/(B-1)/(C-1)/(A-2) were laminated in this order. An adhesion test of the laminate thus obtained proved that release did not occur at a tensile strength of 1.6 N/mm² and at last the adhesive layer of (B-1) was released at a tensile strength of 4.5 N/mm².

A laminate manufactured in the same manner as above was heated in an oven at 150°C for five minutes . When this laminate was removed from the oven, it was found that (B-1) foamed to cause (A-1) to be released and that the recovered (A-1) had little adhesive adhering thereto and hence was in a state ready for reuse. The adhesive layers of (B-1) and (C-1) adhered to (A-2) not required to reuse and, hence, (A-2) could not be released easily.

### Example 4

(B-2) was laminated on one side of (A-1) to a thickness of about 70 *µ*m by bar coating and was cured by allowing the resulting laminate to stand at 23°C, 50%RH for 24 hours. Subsequently, the surface of (B-2) was bonded to (A-2) through about 70 *µ*m-thick (C-1), and the resulting laminate was fixed with clips and then allowed to stand at 23°C, 50%RH for 24 hours in a clipped state, to give a laminate in which (A-1)/(B-2)/(C-1)/(A-2) were laminated in this order.

An adhesion test of the laminate thus obtained proved that release did not occur at a tensile strength of 0.5 N/mm² and at last the adhesive layer of (B-2) was released at a tensile strength of 4.7 N/mm².

A laminate manufactured in the same manner as above was heated in an oven at 150°C for five minutes. When this laminate was removed from the oven, it was found that (B-2) foamed to cause (A-1) to be released and that recovered (A-1) had little adhesive adhering thereto and hence was in a state ready for reuse. The adhesive layers of (B-2) and (C-1) adhered to (A-2) not required to reuse and, hence, (A-2) could not be released easily.

### Example 5

(B-1) was laminated on one side of (A-1) to a thickness of about 300 *µ*m by spin coating and was cured by UV irradiation at a radiant exposure of 400 mJ/cm², to give a laminate of (A-1)/(B-1). In turn, a laminate of (A-2)/(B-1) was formed in the same manner as above except that (A-1) was replaced with (A-2). Subsequently, the (A-1)/(B-1) and the (A-2)/(B-1) were bonded to each other through about 70 *µ*m-thick (C-2) with their (B-1) surfaces facing each other, and the resulting laminate was fixed with clips and then allowed to stand at 23°C, 50%RH for 24 hours in a clipped state, to give a laminate in which (A-1)/(B-1)/(C-2)/(B-1)/(A-2) were laminated in this order.

An adhesion test of the laminate thus obtained proved that the adhesive layer of (B-1) on the (A-1) side was released at a tensile strength of 1.6 N/mm².

A laminate manufactured in the same manner as above was heated in an oven at 150°C for five minutes . When this laminate was removed from the oven, it was found that both the (B-1) layers foamed to cause (A-1) and (A-2) to be released and that recovered (A-1) had little adhesive adhering thereto. Though the adhesive layers of (B-1) and (C-2) adhered to (A-2), these adhesive layers were released from (A-2) in the middle of the removal from the oven.

(A-1) and (A-2) were both in a state ready for reuse.

### Example 6

(B-1) was laminated on one side of (A-1) to a thickness of about 300 *µ*m by spin coating and was cured by UV irradiation at a radiant exposure of 400 mJ/cm², to give a laminate of (A-1)/(B-1). In turn, a laminate of (A-2)/(B-1) was formed in the same manner as above except that (A-1) was replaced with(A-2). Subsequently, the (A-1)/(B-1) and the (A-2)/(B-1) were bonded to each other through about 70 *µ*m-thick (C-1) with their (B-1) surfaces facing each other, and the resulting laminate in which (A-1)/(B-1)/(C-1)/(B-1)/(A-2) were laminated in this order was fixed with clips and then allowed to stand at 23°C, 50%RH for 24 hours in a clipped state, to give a laminate.

An adhesion test of the laminate thus obtained proved that the adhesive layer of (B-1) on the (A-2) side was released at a tensile strength of 0.7 N/mm².

A laminate manufactured in the same manner as above was heated in an oven at 150°C for five minutes. When this laminate was removed from the oven, it was found that both the (B-1) layers foamed to cause (A-1) and (A-2) to be released and that recovered (A-2) had little adhesive adhering thereto. Though the adhesive layers of (B-1) and (C-1) adhered to (A-1), these adhesive layers were released from (A-1) in the middle of the removal from the oven.

(A-1) and (A-2) were both in a state ready for reuse.

### Comparative Example 4

A laminate in which (A-1)/(C-3)/(C-1)/(A-2) were laminated in this order was obtained in the same manner as in Example 1 except that (B-1) laminated to a thickness of about 300 *µ*m by bar coating in Example 3 was replaced with (C-3) laminated to a thickness of about 20 *µ*m by spin coating.

An adhesion test of the laminate thus obtained proved that the adhesive layer of (C-3) was released at a tensile strength of 1.6 N/mm².

A laminate manufactured in the same manner as above was heated in an oven at 150°C for five minutes. When this laminate was removed from the oven, it was found that the appearance of the laminate remained the same as before the heating, with (A-1) and (A-2) not released from the laminate. An adhesion test of the laminate thus heated proved that the adhesive layer of (C-3) was released at a tensile strength of 1.6 N/mm².

### Comparative Example 5

A laminate in which (A-1)/(C-2)/(A-2) were laminated in this order was obtained in the same manner as in Example 4 except that (B-2) of Example 4 was not laminated.

An adhesion test of the laminate thus obtained proved that the adhesive layer of (C-2) was released at a tensile strength of 0.5 N/mm².

A laminate manufactured in the same manner as above was heated in an oven at 150°C for five minutes. When this laminate was removed from the oven, it was found that the appearance of the laminate remained the same as before the heating, with (A-1) and (A-2) not released from the laminate. An adhesion test of the laminate thus heated proved that the adhesive layer of (C-2) was released at a tensile strength of 0.5 N/mm².

### Comparative Example 6

(C-3) was laminated on one side of (A-1) to a thickness of about 20 *µ*m by spin coating and was cured by UV irradiation at a radiant exposure of 400 mJ/cm², to give a laminate of (A-1)/(C-3). In turn, a laminate of (A-2)/(C-3) was formed in the same manner as above except that (A-1) was replaced with(A-2). Subsequently, the (A-1)/(C-3) and the (A-2)/(C-3) were bonded to each other through about 70 *µ*m-thick (B-2) with their (C-3) surfaces facing each other, then fixed with clips and allowed to stand at 23°C, 50%RH for 24 hours in a clipped state, to give a laminate in which (A-1)/(C-3)/(B-2)/(C-3)/(A-2) were laminated in this order.

An adhesion test of the laminate thus obtained proved that the adhesive layers of (C-3) were released at a tensile strength of 1.6 N/mm².

A laminate manufactured in the same manner as above was heated in an oven at 150°C for five minutes. When this laminate was removed from the oven, it was found that though the adhesive layer of (B-2) was released, the adhesive layers of (C-3) adhered to the surfaces of (A-1) and (A-2) could not be released easily.

### Comparative Example 7

(A-1) and (A-2) were bonded to each other through about 70 *µ*m-thick (C-1), then fixed with clips, and allowed to stand at 23°C, 50%RH for 24 hours in a clipped state, to give a laminate in which (A-1)/(C-1)/(A-2) were laminated in this order.

An adhesion test of the laminate thus obtained proved that the adhesive layer of (C-1) was released at a tensile strength of 1.6 N/mm².

A laminate manufactured in the same manner as above was heated in an oven at 150°C for five minutes. When this laminate was removed from the oven, it was found that the appearance of the laminate remained the same as before the heating, with (A-1) and (A-2) not released from the laminate. An adhesion test of the laminate thus heated proved that the adhesive layer of (C-1) was released at a tensile strength of 1.6 N/mm².

### Comparative Example 8

(C-3) was laminated on one side of (A-1) to a thickness of about 300 *µ*m by spin coating and was cured by UV irradiation at a radiant exposure of 400 mJ/cm², to give a laminate of (A-1)/(C-3). In turn, a laminate of (A-2)/(C-3) was formed in the same manner as above except that (A-1) was replaced with (A-2). Subsequently, the two laminates were bonded to each other through 70 *µ*m-thick (C-1) with their (C-3) surfaces facing each other, then fixed with clips, and allowed to stand at 23°C, 50%RH for 24 hours in a clipped state, to give a laminate in which (A-1)/(C-3)/(C-1)/(C-3)/(A-2) were laminated in this order.

An adhesion test of the laminate thus obtained proved that the adhesive layer of (C-3) on the (A-2) side was released at a tensile strength of 0.2 N/mm². (C-3) thus released was observed to have an uncured portion.

### Comparative Example 9

(B-3) was applied onto one side of (A-1) to a thickness of about 200 *µ*m by bar coating and then immediately bonded to (A-2), and the resulting laminate was fixed with clips and allowed to stand at 23°C, 50%RH for seven days in a clipped state, to give a laminate in which (A-1)/(B-3)/(A-2) were laminated in this order.

An adhesion test of the laminate thus obtained proved that (B-3) was released at a tensile strength of 1.2 N/mm².

A laminate manufactured in the same manner as above was heated in an oven at 150°C for five minutes. When this laminate was removed from the oven, it was found that the appearance of the laminate remained the same as before the heating, with each substrate not released from the laminate. An adhesion test of the laminate thus heated proved that though (B-3) was released at a tensile strength of 0.2 N/mm², the adhesive layer of (B-3) remained on (A-1) and (A-2) and was difficult to release therefrom.

### Example 7

(B-5) was applied onto one side of AL plate (A-1) to a thickness of about 200 *µ*m by bar coating and then immediately bonded to another AL plate (A-2), and the resulting laminate was allowed to age and cure at room temperature for seven days in a pressure-contact state, to give a laminate in which (A-1)/(B-5)/(A-2) were laminated in this order. (Hereinafter, the substrates to be bonded will be referred to as "substrate 1" and "substrate 2".)

The laminate thus obtained was tested for adhesion (hereinafter referred to as "adhesive power prior to heating" ) and the adhesion test proved that the adhesive layer was released at a tensile strength of 1.2 N/mm².

A laminate manufactured in the same manner as above was heated in an oven at 160°C for five minutes. When this laminate was removed from the oven, it was found that (B-5) foamed to cause (A-2) to be released and that recovered (A-1) had little adhesive adhering thereto and hence was in a state ready for reuse.

### Example 8 and Comparative Examples 10 to 14

Laminates were manufactured according to Example 7 using the substrates and adhesives of the types shown in Table 2. The results of measurement of Example 8 and Comparative Examples 10 to 14 as well as of Example 7 as to their adhesive powers prior to heating, tensile strength of substrate after heating (hereinafter referred to as "tensile strength") and the presence or absence of adhesive adhering to each substrate after heating (hereinafter referred to as "the presence or absence of adhering adhesive) are shown in Table 2.

**Table-2**

| | Example | | Comparative example | | | |
|---|---|---|---|---|---|---|
| | 7 | 8 | 10 | 11 | 12 | 13 |
| Substrate 1 | A-1 | A-2 | A-1 | A-2 | A-2 | A-2 |
| Adhesive type | B-5 | B-6 | C-2 | C-5 | C-6 | B-3 |
| Substrate 2 | A-1 | A-2 | A-1 | A-2 | A-2 | A-2 |
| Adhesive power prior to heating (N/mm²) | 1.2 | 2.3 | 2.8 | 2.8 | 3.3 | 1.4 |
| Heating condition ¹⁾ | (a) | (b) | (a) | (b) | (b) | (b) |
| Tensile strength (N/mm²) | 0 | 0 | 4.8 | 2.1 | 2.6 | 1.4 |
| Presence or absence of adhering adhesive ²⁾ | ○ | ○ | × | × | × | × |

| | | | | | | |
|---|---|---|---|---|---|---|
| 1) (a): allowed to stand in an oven heated to 160°C for five minutes. (b): allowed to stand in an oven heated to 150°C for five minutes. | | | | | | |
| 2) The case where any adhesive did not adhere to a substrate after the measurement of tensile strength is represented by ○, while the case where an adhesive adhered to a substrate is represented by ×. | | | | | | |

The laminate of the present invention has a high adhesive property when in use, while, after having been irradiated with energy, it exhibits a superior easy-release property such that the substrate used therein can be released from the laminate with little adhesive layer adhering thereto or with adhesive layer, if adhering thereto, in a state capable of easy release from the substrate.

Also, an adhesive containing the resin composition comprising an epoxy resin and/or modified silicone resin and a foaming agent as an active ingredient has a high adhesive property unless it is heated, while, after having been heated, it exhibits an easy-release property such as to allow the substrate to which it adheres to be released with little adhesive layer adhering thereto or with adhesive layer, if adhering thereto, in a state capable of easy release from the substrate.

The laminate of the present invention and a laminate comprising the resin composition of the present invention and a substrate can be used in fields calling for reuse of their substrates such as articles for vehicles, household electrical appliances, office supplies, living commodities, building materials or electronic products. Further, recovered substrates can be recycled (reused).

## Claims

1. A laminate comprising: (A): a substrate, (B): an adhesive that becomes capable of release when receiving energy, and (C): an adhesive that does not become capable of release even when receiving energy, which are laminated sequentially.

2. The laminate according to claim 1, wherein the substrate (A) is at least one selected from a metal, an inorganic substance, plastic, synthetic fiber, natural fiber, chemical fiber, wood, paper, and hide.

3. The laminate according to claim 1 or 2, wherein the adhesive (B) is an adhesive of which adhesive power lowers when receiving energy.

4. The laminate according to claim 1 or 2, wherein the adhesive (B) is an adhesive containing a foaming agent that foams when receiving energy.

5. The laminate according to claim 4, wherein the adhesive (B) comprises the foaming agent and at least one selected from a room temperature curing resin, a hot-melt resin, a thermosetting resin and a photosetting resin.

6. The laminate according to claim 1 or 4, wherein the adhesive (B) that becomes capable of release when receiving energy and the adhesive (C) that does not become capable of release even when receiving energy are (B-1): a crosslinkable polymer containing a foaming agent, and (C-1): a crosslinkable polymer, respectively.

7. The laminate according to claim 6, wherein the crosslinkable polymer is a thermosetting resin and/or a photosetting resin.

8. The laminate according to any one of claims 4 to 7, wherein the foaming agent is at least one selected from a thermal expansible hollow body, an inorganic foaming agent, and an organic foaming agent.

9. The laminate according to any one of claims 1 to 8, further comprising (B'): an adhesive that becomes capable of release when receiving energy, (B') being same as or different from the adhesive (B), and (A'): a substrate same as or different from the substrate (A), which are sequentially laminated on an adhesive layer surface of the adhesive (C).

10. The laminate according to claim 9, wherein: (B) and/or (B') are photosetting resins of a crosslinkable polymer; and (C) and/or (C') are thermosetting resins of a crosslinkable polymer.

11. The laminate according to claim 9 or 10, wherein the adhesive (C) is an adhesive that is permeable to energy to such a degree as to allow release of the adhesives (B) and (B').

12. A resin composition comprising an epoxy resin and/or a modified silicone resin, and a foaming agent.

13. The resin composition according to claim 12, wherein the foaming agent is at least one selected from a thermal expansible hollow body, an inorganic foaming agent, and an organic foaming agent.

14. An adhesive comprising a resin composition according to claim 12 or 13 as an active ingredient.

15. A laminate comprising an adhesive according to claim 14, and an adherend.

16. An article comprising a laminate according to any one of claims 1 to 11 and 15.

17. A substrate recycling method comprising allowing a laminate according to any one of claims 1 to 11 and 15 to receive energy, releasing a substrate, and then recycling the same.
